Europäisches Patentamt

European Patent Office

Office européen des brevets

(19)

(11) Veröffentlichungsnummer: **0 172 555**
**B1**

(12) **EUROPÄISCHE PATENTSCHRIFT**

(45) Veröffentlichungstag der Patentschrift: **24.10.90**

(51) Int. Cl.⁵: **B 25 B 1/24**

(21) Anmeldenummer: **85110417.4**

(22) Anmeldetag: **20.08.85**

(54) Schraubstock.

(30) Priorität: **22.08.84 DE 3430814**

(43) Veröffentlichungstag der Anmeldung:
**26.02.86 Patentblatt 86/09**

(45) Bekanntmachung des Hinweises auf die
Patenterteilung:
**24.10.90 Patentblatt 90/43**

(84) Benannte Vertragsstaaten:
**AT CH DE FR IT LI**

(56) Entgegenhaltungen:
| | |
|---|---|
| BE-A- 524 208 | DE-A-3 244 022 |
| CH-A- 307 069 | DE-C- 729 654 |
| DE-A-2 912 832 | GB-A- 638 944 |
| DE-A-3 222 699 | US-A-3 741 064 |

LA PARTIQUE DES INDUSTRIES MECANIQUES,
Band 46, Nr. 4, April 1963, Seite 96; "Serrage
dans un étau de plaques en tôle"

(73) Patentinhaber: **Bessey & Sohn GmbH. & Co.**
**Besigheimer Strasse 40-42**
**D-7120 Bietigheim-Bissingen (DE)**

(72) Erfinder: **Klimach, Horst, Ing. grad.**
**Pfaffenhecke 8**
**D-7129 Ilsfeld-Auenstein (DE)**

(74) Vertreter: **Hoeger, Stellrecht & Partner**
**Uhlandstrasse 14 c**
**D-7000 Stuttgart 1 (DE)**

Courier Press, Leamington Spa, England.

EP 0 172 555 B1

**Beschreibung**

Spannwerkzeuge, mit denen sich Werkstücke parallelspannen, d.h. zwischen im wesentlichen ebenen und parallel zueinander verlaufenden Spannflächen fixieren lassen, sind in Form von Schraubstöcken allgemein bekannt. Es sind aber auch schon Schraubstöcke bekannt geworden (s. z.B. DE-PS 811 215, DE-PS 90 192, DE-PS 371 835 oder DE-OS 32 22 699), die eine handbetätigbare Gewindespindel, eine relativ zu dieser unverschiebbare sowie eine verschiebbare Spannbacke aufweisen, welch letztere an einer auf der Gewindespindel angeordneten Mutter um eine zur Spindelachse senkrechte Achse schwenkbar angelenkt ist und sich deshalb bezüglich der unverschiebbaren Spannbacke schräg stellen lässt, so daß es möglich ist, Werkstücke mit schräg zueinander verlaufenden Flächen, z.B. keilförmige Werkstücke, so einzuspannen, daß sie mit ihren schräg zueinander verlaufenden Flächen satt gegen die beiden Spannbacken anliegen. Allen diesen bekannten Schraubstöcken ist aber gemeinsam, daß, wenn der Schraubstock auf einer Arbeitsplatte befestigt ist, sich die Orientierung der Gewindespindel nicht ändern lässt, was z.B. den Nachteil mit sich bringt, daß beim Einspannen eines winkelförmigen Werkstücks derart, daß der eine Schenkel zwischen den Spannbacken liegt und sich der andere Schenkel in Richtung auf den Griff der Gewindespindel zu erstreckt, der letztere unter Umständen nicht mehr richtig erfasst und betätigt werden kann, da der Zwischenraum zwischen dem Gewindespindelgriff und dem neben ihm verlaufenden Werkstückschenkel ein Durchgreifen nicht oder kaum noch ermöglicht.

Der Erfindung lag die Aufgabe zugrunde, ein möglichst universell verwendbares, jedoch billig herzustellendes Spannwerkzeug zu schaffen, mit dem sich zumindest nicht nur parallel-, sondern auch schrägspannen lässt und welches den vorstehend erwähnten Nachteil nicht aufweist.

Zur Lösung dieser Aufgabe wurde von einem bekannten Spannwerkzeug (DE-OS 32 44 022) ausgegangen, welches eine handbetätigbare Gewindespindel, eine relativ zu dieser unverschiebbare Spannbacke, die an einer auf einer gewindelosen Verlängerung der Gewindespindel drehbaren Hülse um eine zur Spindelachse senkrechte Achse schwenkbar angelenkt ist, sowie eine verschiebbare Spannbacke, welche an einer auf der Gewindespindel angeordneten Mutter um eine zu der Schwenkachse der anderen Spannbacke parallele Achse schwenkbar angelenkt ist, aufweist. Dieses bekannte Spannwerkzeug dient dem Zweck, platten-, leisten- oder stabförmige Werkstücke unter Bildung eines Winkels gegeneinander anzulegen und stumpf miteinander zu verbinden, wozu die eine Spannbacke zwei einen entsprechenden Winkel miteinander bildende erste Spannfläche und die andere Spannbacke zwei den ersten Spannflächen gegenüberliegende und parallel zu diesen verlaufende zweite Spannflächen besitzt.

Erfindungsgemäss wird nun vorgeschlagen, ein solches Spannwerkzeug als Schraubstock mit einander zugewandten, im wesentlichen ebenen Spannflächen an den beiden Spannbacken auszubilden und mit Führungsmittel zum Parallelführen der Spannflächen der Spannbacken vorzusehen, wobei die Spannbacken Aufnahmen aufweisen, die das Abringen der Führungsmittel gestalten und die Führungsmittel lösbar in die Aufnahmen einsetzbar sind. Werden die Führungsmittel zum Parallelhalten der Spannflächen der beiden Spannbacken nicht verwendet, so lassen sich die Spannbacken durch Schwenken der Gewindespindel seitlich gegeneinander versetzen, so daß es ohne weiteres möglich ist, auch ein winkelförmiges Werkstück zwischen den beiden Spannbacken so zu spannen, daß sich ein hinreichender Zwischenraum zwischen dem Gewindespindelgriff und dem diesem benachbarten Werkstückschenkel ergibt; andererseits lassen sich beim Einsatz der erwähnten Führungsmittel die Spannflächen der beiden Spannbacken während des Spannens exakt parallel zueinander halten.

Bei dem erfindungsgemässen Spannwerkzeug lässt sich die Gewindespindel als Ganzes gegenüber einem zu spannenden Werkstück auch dann noch verschwenken, wenn das Spannwerkzeug dadurch auf einer Arbeitsplatte oder dergleichen befestigt wird, daß Arme von Spannzwingen in an der unverschiebbaren Spannbacke vorgesehene Führungsöffnungen eingesteckt werden und der Schraubstock dann mit Hilfe dieser Spannzwingen auf der Arbeitsplatte festgelegt wird.

Eine bevorzugte Ausführungsform des erfindungsgemässen Spannwerkzeugs zeichnet sich durch mindestens einen parallel zur Gewindespindel durch Führungskanäle in den Spannbakken schiebbaren Führungsstab aus. Derartige Führungsmittel sind besonders billig, da die Führungskanäle die Form von Bohrungen oder eingeformten Kanälen haben können und sich für den Führungsstab Rundmaterial verwenden lässt. Vorzugsweise sieht man zu beiden Seiten der Gewindespindel jeweils einen Führungsstab vor; weisen die Führungsstäbe einen mit der einen Spannbacke zusammenwirkenden Anschlag auf und werden sie so dimensioniert, daß sie in den Führungskanälen dieser Spannbacke nur schwer verschiebbar sind, die andere Führungsbacke jedoch leicht auf ihnen gleitet, kann es nicht vorkommen, daß beim Betätigen des Schraubstocks einer der Führungsstäbe aus einer der Spannbacken herausgezogen wird.

Die Spannbacken lassen sich besonders preiswert herstellen und einfach montieren, wenn sie ein Ober- und ein Unterteil aufweisen, welche durch muldenförmige, mit jeweils einem Schwenklager versehene Ausnehmungen zusammen einen Durchgangskanal für die Gewindespindel bzw. deren Verlängerung bilden, wobei sich der Herstellungspreis dadurch noch weiter senken lässt, daß die beiden Spannbacken identisch ausgebildet werden. Ober- und Unterteil eines Spannbackens könnten durch entsprechend gestaltete Rastelemente wie Zapfen und Bohrungen miteinander verrastet werden. Bevorzugt wird jedoch eine Ausführungsform, bei der Ober- und Unterteil durch Schrauben miteinander verbunden sind. Sieht man für diese Schrauben im Oberteil Kanäle vor, in denen die Schraubenköpfe versenkt sitzen, ergibt sich ohne weiteren Aufwand ein zusätzlicher Vorteil: Versieht man die Spannbacken an ihrer Oberseite mit mehreren, parallel zu den Schwenkachsen verlaufenden Einsteckkanälen, wobei es sich bei den letzteren um die Kanäle zum Einsetzen der Schrauben handeln kann, so lassen sich Stifte oder in jeder Werkstatt vorhandene andere stiftförmige Elemente wie Schrauben in diese Kanäle einsetzen, um so zwischen diesen stiftförmigen Elementen Werkstücke spannen zu können, welche sich zwischen den Spannbacken ansonsten nicht einspannen liessen; so ist es z.B. möglich, eine runde, ovale oder anders gestaltete Scheibe, eine Halbkugel oder dergleichen zwischen den stiftförmigen Elementen auf die Spannbacken aufzusetzen und das Werkstück dann zwischen diesen stiftförmigen Elementen einzuspannen. Das Festspannen eines Werkstücks mit Hilfe von oben in die Spannbacken eines Schraubstocks eingesetzten Stiften ist an sich bekannt (vgl. La Pratique Des Industries Méchaniques 46, 96).

Mit Hilfe der erwähnten Führungsmittel lässt sich der erfindungsgemässe Schraubstock sogar zu einer Werkzeugmaschine ausbauen; dabei wird eine Ausführungsform bevorzugt, bei der die Spannbacken zu beiden Seiten der Gewindespindel jeweils mindestens einen Führungskanal aufweisen und auf der von der unverschiebbaren Spannbacke abgewandten Seite der verschiebbaren Spannbacke auf die in die Spannbacken einschiebbaren Führungsstäbe eine Halterung für ein Zusatzaggregat aufgeschoben wird. Bei diesem Zusatzaggregat kann es sich um einen Antriebsmotor für einen Bohrer, Fräser oder dergleichen handeln, mit dem sich ein sich zwischen den Spannbacken gehaltenes Werkstück bearbeiten lässt. Es ist aber auch möglich, den Motor mit einem Werkstück-Spannfutter zu versehen und auf die unverschiebbare Spannbacke einen Werkstück- oder einen Werkzeughalter aufzusetzen, so daß sich mit dem Schraubstock dann z.B. drechseln lässt. In diesem Fall kann es des weiteren empfehlenswert sein, auf die verschiebbare Spannbacke einen Werkzeughalter aufzusetzen, der das Drechselwerkzeug abstützt. Um die Zusatzaggregat-Halterung in Richtung auf ein zwischen den Spannbacken gehaltenes Werkstück vorschieben zu können, wird ferner vorgeschlagen, die Halterung mit einer Durchtrittsöffnung für die Gewindespindel zu versehen und auf die letztere einen mit einem Innengewinde versehenen Handgriff aufzuschrauben, und zwar von derjenigen Seite der Halterung her, die von den Spannbacken abgewendet ist. Mit diesem Handgriff lässt sich dann die Zusatzaggregat-Halterung längs der Führungsstäbe verschieben. Ordnet man auf den Führungsstäben zwischen der verschiebbaren Spannbacke und der Zusatzaggregat-Halterung Schraubenfedern an, so genügt es, den mit dem Innengewinde versehenen Handgriff gegen die Halterung anzulegen; es wäre aber auch denkbar, den Handgriff so mit der Halterung zu verbinden, daß er sich gegenüber der letzteren drehen lässt, an dieser jedoch in axialer Richtung gesichert ist.

Schliesslich kann der erfindungsgemässe Schraubstock auch noch so ergänzt werden, daß sich mit ihm Gehrungsschnitte durchführen lassen; zu diesem Zweck sind bei einer bevorzugten Ausführungsform auf die Spannbacken aufsetzbare, jeweils um einen der Einsteckkanäle schwenkbare Führungen für ein Sägeblatt vorgesehen.

Bei der obigen Ausführungsform des Schraubstocks zum Durchführen von Gehrungsschnitten sind die beiden Spannbacken entsprechend einem gewünschten Gehrungswinkel gegeneinander zu versetzen. Bereits ein üblicher Gehrungswinkel von 45° hat bei dieser Ausführungsform, vor allem bei breiten Werkstücken, einen erheblichen Versatz der Spannbacken zur Folge. Eine weitere Ergänzung des Schraubstocks zum Gehrungssägen zeigt diese Nachteile nicht. Dabei ist eine an einer der Spannbacken, insbesondere der unverschieblichen Spannbacke, anbringbare Führung für ein Sägeblatt vorgesehen, wobei diese Führung zwei in Sägeblatt-Verschieberichtung im Abstand voneinander angeordnete Walzenpaare aufweist und um eine zu den Schwenkachsen parallele Achse drehbar ist.

Damit jedoch das Werkstück in vertikaler Richtung vollständig durchsägt werden kann, ohne dass es mit Aufsatzspannbacken oberhalb einer Oberkante der Spannbacken zu spannen ist, ist es notwendig, daß die die Führung tragende Spannbacke mit einem Trägerelement ausgestattet ist, das mindestens auf einer Seite der Spannbacke ein gegenüber einer Oberkante der Spannbacke nach unten versetztes Lagerauge zur drehbaren Aufnahme der Führung besitzt.

Damit sich der Schraubstock auf einer Arbeitsplatte festlegen lässt, empfiehlt es sich, mindestens die unverschiebbare Spannbacke mit mehreren, zu ihrer Unterseite parallelen Einstecköffnungen für Spannzwingenarme zu versehen.

Weitere Vorteile der Erfindung ergeben sich aus der nachfolgenden Beschreibung sowie der beigefügten zeichnerischen Darstellung einer besonders vorteilhaften Ausführungsform des erfindungsgemässen Schraubstocks samt Zusatzteilen; in der Zeichnung zeigen:

Figur 1 eine Draufsicht auf den Schraubstock mit in die Spannbacken eingeschobenen Führungsstäben zum Parallelhalten der Spannbacken-Spannflächen;

Figur 2 einen Längsschnitt durch den Schraubstock gemäss der Linie 2-2 in Figur 2;

Figur 3 einen Schnitt durch die Gewindespindel und die beiden Führungsstäbe mit einer Stirnansicht der verschiebbaren Spannbacke entsprechend der Schnittlinie 3-3 in Figur 2;

Figur 4 eine der Figur 1 entsprechende Draufsicht auf den Schraubstock, jedoch ohne Führungsstangen, wobei ein zwischen den Spannbacken eingespanntes, keilförmiges Werkstück strichpunktiert angedeutet wurde;

Figur 5 einen der Figur 2 entsprechenden Längsschnitt, wobei der Schraubstock jedoch durch eine Zusatzaggregat-Halterung, einen Handgriff zum Verschieben der letzteren und durch auf die beiden Spannbacken aufgesetzte Werkstück- und Werkzeughalter sowie durch ein Führungsbett für die beiden Spannbacken ergänzt wurde;

Figur 6 einen Schnitt nach der Linie 6-6 in Figur 5, wobei die Schnittebene der Figur 5 in Figur 6 durch die Linie 5-5 angedeutet wurde;

Figur 7 eine der Figur 1 entsprechende Draufsicht auf den Schraubstock mit in die Spannbacken eingesetzten Spannstiften zum Einspannen von Werkstücken mit beliebiger Kontur;

Figur 8 eine Draufsicht auf ein erstes Ausführungsbeispiel eines durch auf die Spannbacken aufgesteckte Sägeblatt-Führungen zu einer Gehrungssägevorrichtung ergänzten Schraubstocks;

Figur 9 eine Seitenansicht der Gehrungssägevorrichtung nach Figur 8;

Figur 10 eine Draufsicht auf ein zweites Ausführungsbeispiel eines zu einer Gehrungssägevorrichtung ergänzten Schraubstocks;

Figur 11 eine Ansicht der Gehrungssägevorrichtung in Fig. 11 in Richtung A mit geschnittenem Lagerauge und

Figur 12 einen Schnitt längs Linie 12-12 in Fig. 11.

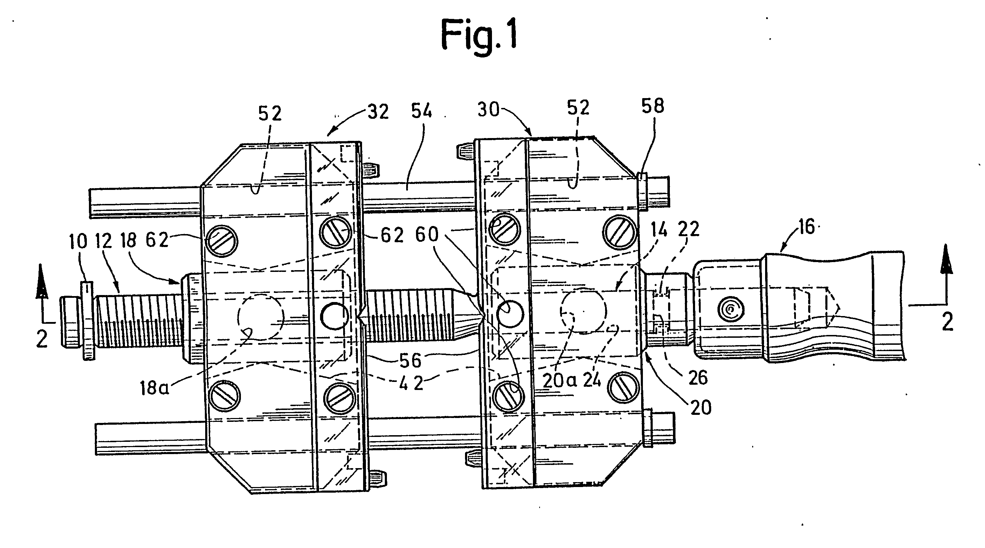

Anhand der Figuren 1 bis 3 soll nun zunächst die einfachste Ausführungsform des erfindungsgemässen Schraubstocks näher erläutert werden.

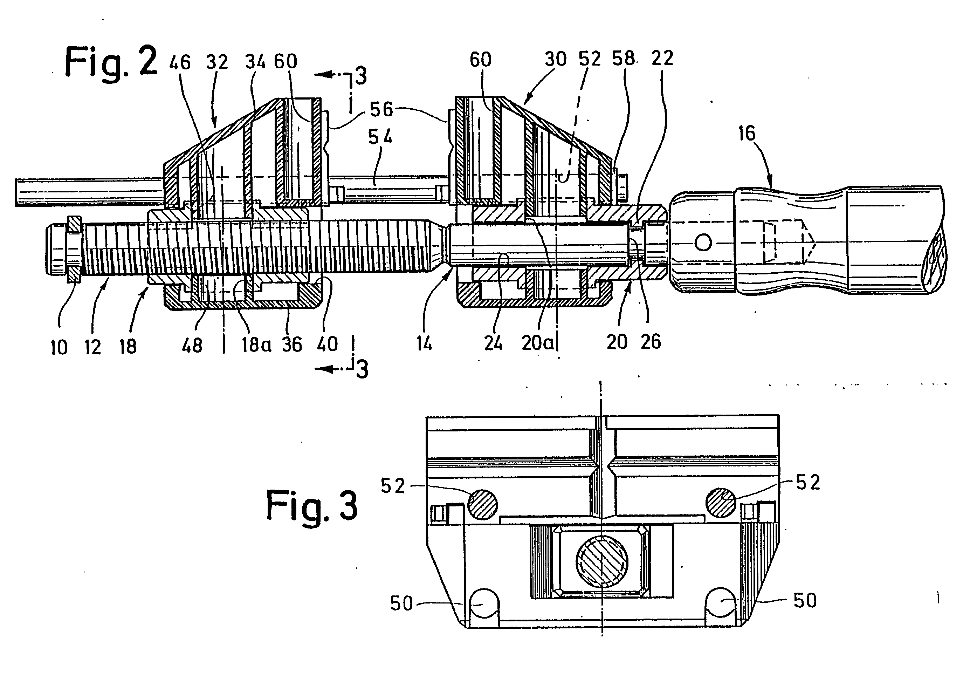

Eine mit einem Axialanschlag 10 in Form eines Sprengrings oder dergleichen versehene Gewindespindel 12 besitzt eine wellenförmige Verlängerung 14, an der ein Handgriff 16 befestigt ist. Auf die Gewindespindel 12 ist eine mit einem Innengewinde versehene Gewindehülse 18 aufgeschraubt, während auf der Spindelverlängerung 14 eine Hülse 20 sitzt, die eine mit Ausnahme eines Innenbunds 22 glatte Längsbohrung 24 aufweist. Der Innenbund 22 greift in eine Nut 26 der Spindelverlängerung 14 ein, so daß sich die Spindelverlängerung 14 zwar in der Hülse 20 drehen lässt, die letztere jedoch relativ zur Gewindespindel 12 in axialer Richtung nicht verschiebbar ist. Beide Hülsen 18 und 20 besitzen eine Querbohrung 18a bzw. 20a zum Anlenken jeweils einer Spannbacke 30 bzw. 32, welche, wie sich aus den Figuren 1 und 2 ergibt, identisch ausgebildet sind und ein Oberteil 34 sowie ein Unterteil 36 umfassen, deren jedes eine muldenförmige Ausnehmung 38 bzw. 40 aufweist, die bei zusammengesetzter Spannbacke einen Durchgangskanal 42 für die Gewindespindel 12 bzw die Spindelverlängerung 14 bilden welcher sich nach seinen beiden, Enden zu erweitert (s. Figur 1), um die Spannbacken gegenüber der Gewindespindel und der Spindelverlängerung 12 bzw. 14 oder die Gewindespindel samt Spindelverlängerung gegenüber den beiden Spannbacken 30, 32 verschwenken zu können.

Der Anlenkung der Spannbacken an den Hülsen 18 und 20 dienen Gelenkzapfen 46 und 48, die an das Oberteil 34 bzw. das Unterteil 36 angeformt sind und in die entsprechende Querbohrung 18a bzw. 20a eingreifen (s. Figur 2).

Die Spannbacken besitzen im Unterteil 36 zu beiden Seiten der Gewindespindel 12 jeweils eine Einstecköffnung 50 zum Einschieben eines Spannzwingenarms, um so den Schraubstock insbesondere über die unverschiebbare Spannbacke 30 mit Hilfe zweier Spannzwingen auf einer Arbeitsplatte festlegen zu können. Ausserdem sind im Oberteil 34 zu beiden Seiten der Gewindespindel Führungskanäle 52 vorgesehen, so daß sich durch in die letzteren eingeschobene Führungsstäbe 54 eine Ausrichtung der beiden Spannbacken derart, daß ihre Spannflächen 56 parallel zueinander verlaufen, gewährleisten lässt. Es ist von Vorteil, die beiden Führungsstäbe mit Anschlägen 58 zu versehen und ihren Querschnitt im Bereich der unverschiebbaren Spannbacke 30 so zu gestalten, daß die Führungsstäbe 54 beim Bewegen der Spannbacke 32 gemäss den Figuren 1 und 2 nach rechts relativ zur Spannbacke 30 nicht verschoben werden — in den Führungskanälen 52 der Spannbacke 32 sollen die Führungsstäbe 54 hingegen leicht laufen.

Wie die Figuren 1 und 2 erkennen lassen, besitzt das Oberteil 34 einer jeden Spannbacke mehrere Einsteckkanäle 60, von denen einige Verbindungsschrauben 62 aufnehmen, welche in nicht dargestellte Gewindebohrungen der Unterteile 36 eingeschraubt werden, um die Ober- und Unterteile der Spannbacken zusammenzuhalten, wobei die Köpfe der Verbindungsschrauben tief in den Einsteckkanälen 60 versenkt sind. Deshalb lassen sich, worauf später noch zurückzukommen sein wird, in die Einsteckkanäle 60 von oben auch Stifte oder dergleichen in die Spannbacken einsetzen.

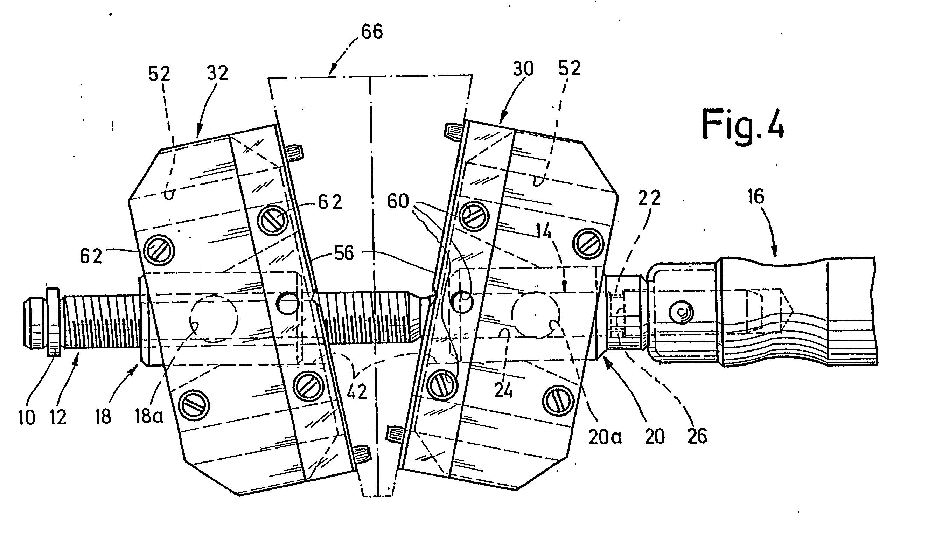

Aus Figur 4 wird ersichtlich, daß sich nach dem Entfernen der Führungsstäbe 54 auch Werkstücke 66 mit nicht parallel zueinander verlaufenden Werkstückflächen fest zwischen den Spannbacken 30 und 32 einspannen lassen.

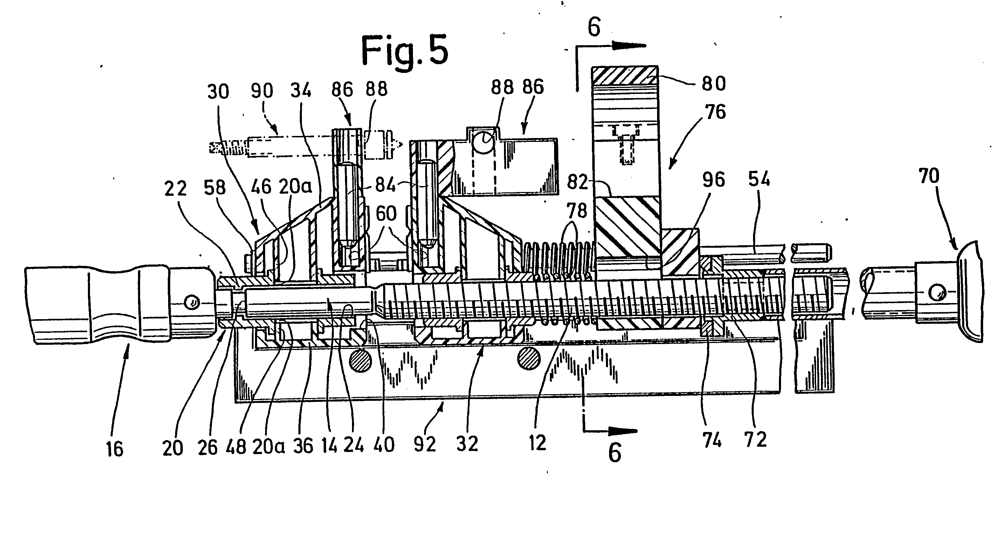

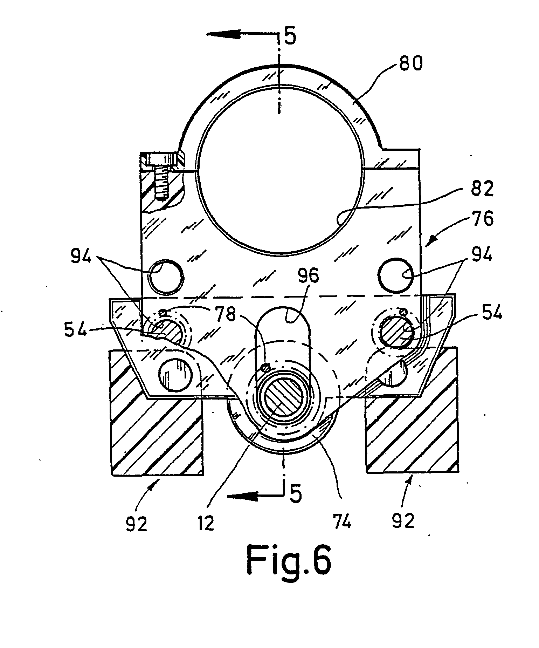

Die Figuren 5 und 6 zeigen den in Figur 1 dargestellten Schraubstock mit einem zusätzlichen Handgriff 70, welcher eine auf der Gewindespindel 12 laufende Mutter 72 und ein Widerlager 74 besitzt, um eine aus Kunststoffteilen zusammengesetzte und auf die Führungsstäbe 54 aufgeschobene Zusatzaggregat-Halterung 76 gemäss Figur 5 entgegen der Wirkung von auf den Führungsstäben 54 sitzenden Druckfedern 78 nach links schieben zu können. In eine durch eine Art Rohrschelle 80 verschlossene Aufnahmeöffnung 82 der Halterung 76 lässt sich ein nicht dargestellter, mit einem Spannfutter versehener, ähnlich einer Handbohrmaschine ausgebildeter Elektromotor einsetzen und mit Hilfe der Rohrschelle 80 festspannen, während sich mittels in die Einsteckkanäle 60 einsetzbarer Steckstifte 84 auf den Spannbacken 30 und 32 Kunststoffteile 86 anbringen lassen, die vorzugsweise identisch ausgebildet sind. Das auf der unverschiebbaren Spannbacke 30 befestigte Kunststoffteil 86 soll mittels zweier Steckstifte 84 gehalten sein, während die Figur 5 erkennen lässt, daß das auf die andere Spannbacke 32 aufgesetzte Kunststoffteil 86 schwenkbar angebracht ist. Eine Öffnung 88 der Kunststoffteile 86 kann dazu dienen, in dem gemäss Figur 5 linken Kunststoffteil eine Spitzenlagerung 90 für ein Werkstück zu halten, dessen anderes Ende durch den nicht dargestellten Elektromotor angetrieben wird — zu diesem Zweck sind die Spitzenlagerung 90 und das Zentrum der Aufnahmeöffnung 82 der Halterung 76 koaxial angeordnet. Das auf die Spannbacke 32 aufgesteckte Kunststoffteil 86 kann schliesslich der Halterung oder Abstützung eines Werkzeugs dienen, so daß sich der Schraubstock als eine Art Drehbank oder zum Drechseln verwenden lässt.

Um die Gewindespindel 12 sowie die Handgriffe 16 und 70 im Abstand über einer den Schraubstock tragenden Arbeitsplatte zu halten, ist ein Bett 92 vorgesehen, welches erfindungsgemäss als wannenförmige Aufnahme für den Schraubstock ausgebildet ist, so daß sich die Spannbacke 32 längs des Betts 92 verschieben lässt.

Wie die Figur 6 erkennen lässt, besitzt die Zusatzaggregat-Halterung 76 zwei Paare von Führungskanälen 94 für die Führungsstäbe 54 sowie ein Langloch 96 für den Durchtritt der Gewindespindel 12, so daß sich die Zusatzaggregat-Halterung 76 in zwei verschiedenen Höhenpositionen auf die Führungsstäbe 54 aufstecken lässt.

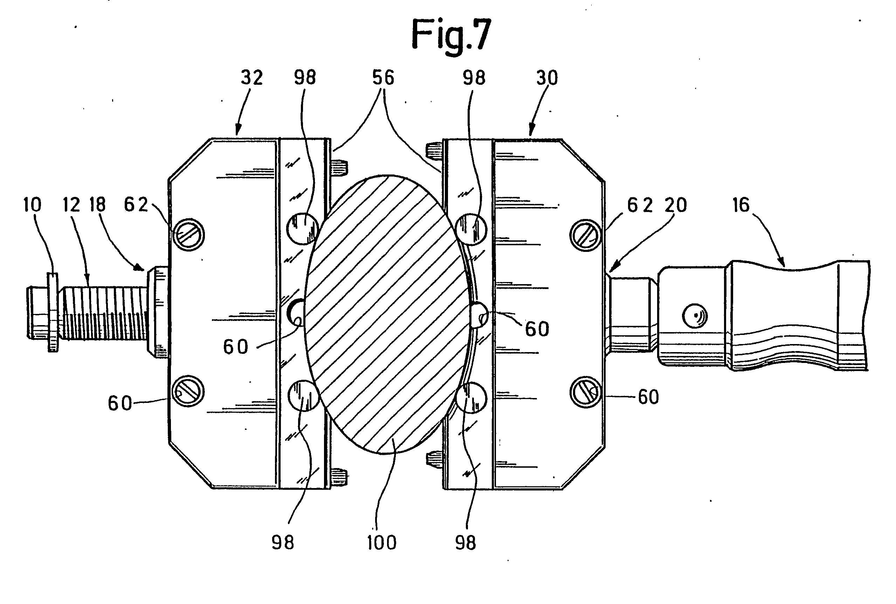

Die Figur 7 zeigt, wie sich mit Hilfe des erfindungsgemässen Schraubstocks Werkstücke beliebiger Kontur spannen lassen. Zu diesem Zweck werden Spannstifte 98 in wenigstens zwei Einsteckkanäle 60 der einen Spannbacke und mindestens einen Einsteckkanal 60 der anderen Spannbacke eingesetzt. Wie eine Betrachtung der Figur 7 zeigt, lässt sich mit vier solcher Spannstifte 98 ein ovales Werkstück 100 sicher festspannen; dasselbe würde aber auch für Werkstücke anderer Gestalt gelten selbstverständlich sitzen diese Werkstücke dann über den beiden Spannbacken 30 und 32.

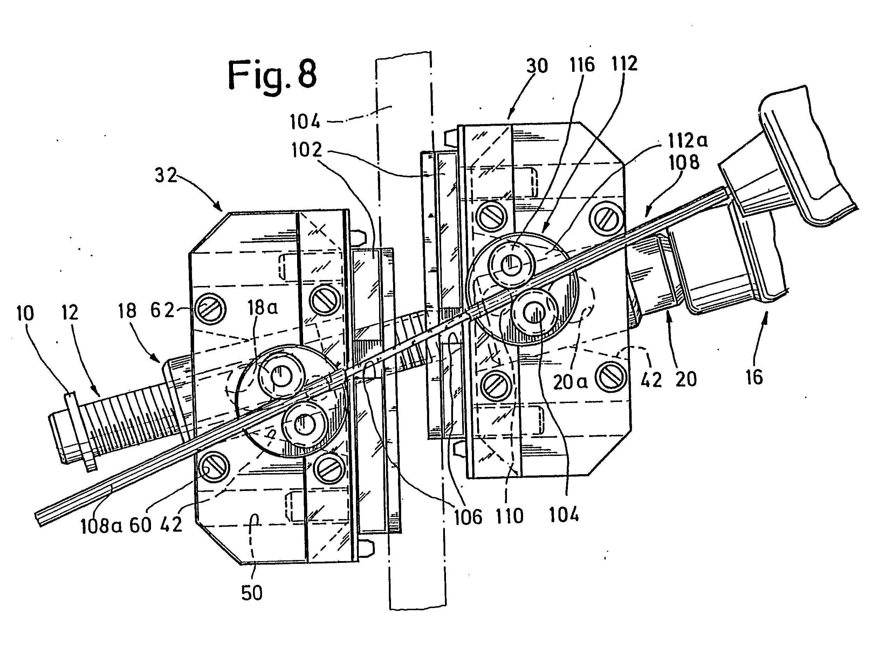

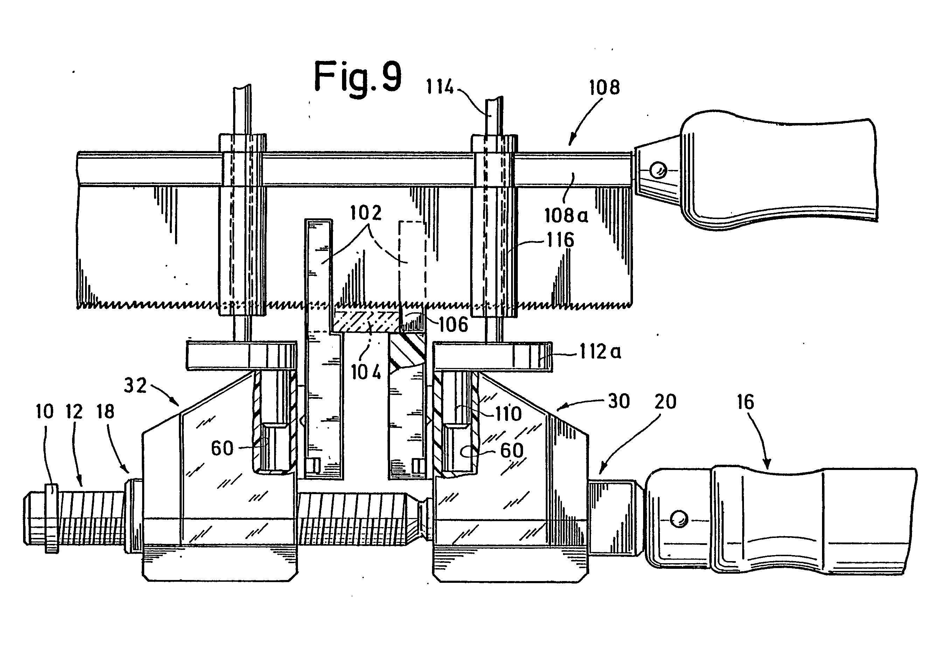

Die Figuren 8 und 9 zeigen schliesslich den zu einer Gehrungssäge-Vorrichtung ergänzten Schraubstock. Zu diesem Zweck werden zunächst auf den Spannflächen 56 der beiden Spannbacken mittels nicht näher dargestellter Befestigungsmittel Aufsatzspannbacken 102 befestigt, die es erlauben, eine auf Gehrung zu schneidende Leiste 104 oder dergleichen über den Spannbacken 30, 32 zu halten. Wie sich aus Figur 8 ergibt, besitzen die Aufsatzspannbacken 102 in der Mitte jeweils einen Schlitz 106 für den Durchtritt einer Rückensäge 108. Um diese zu halten und zu führen, werden in die mittleren Einsteckkanäle 60 der beiden Spannbacken Zapfen 110 drehscheibenförmiger Sägeblattführungen 112 eingesetzt. Die letzteren tragen jeweils zwei vertikal verlaufende Achsen 114, auf die Führungswalzen 116 aufgesteckt sind. Jede Führungswalze besitzt eine Umfangsnut 118, die in ihrer Breite der Höhe des Rückens 108a der Rückensäge 108 angepasst ist, und der Abstand der beiden Achsen 114 einer jeden Sägeblattführung 112 ist so gewählt, daß der Rücken 108 gerade zwischen die beiden Führungswalzen 116 passt.

Schliesslich ist die Länge der Führungswalzen 116 so bemessen, daß die Schneide der Rückensäge 108 eben die Scheiben 112a der Sägeblattführungen 112 tangiert, wenn alle Führungswalzen auf diesen Scheiben aufsitzen. Dann greift die Rückensäge mit ihrem Sägeblatt durch die Schlitze 106 der Aufsatzspannbacken 102 hindurch.

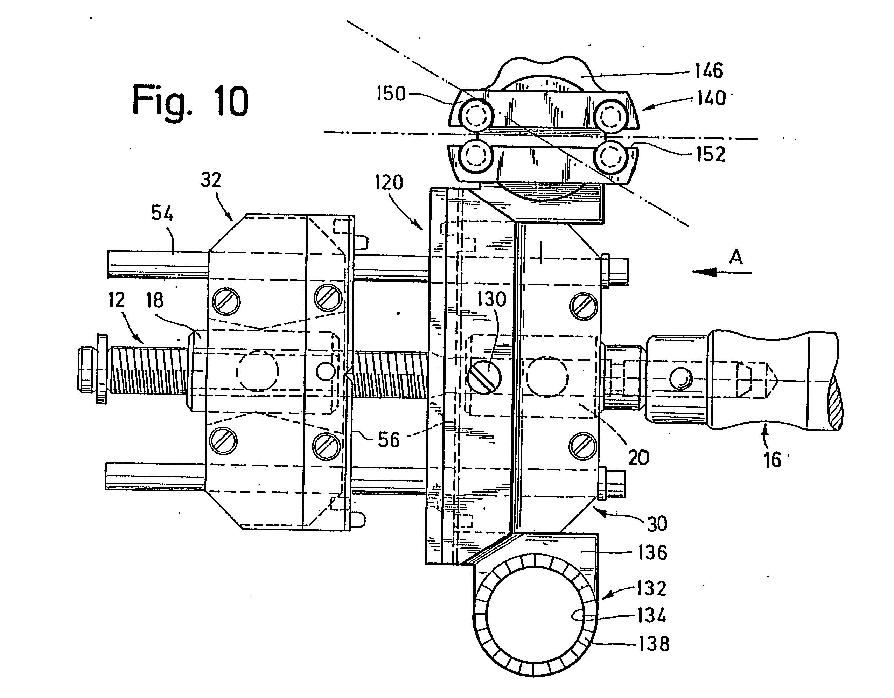

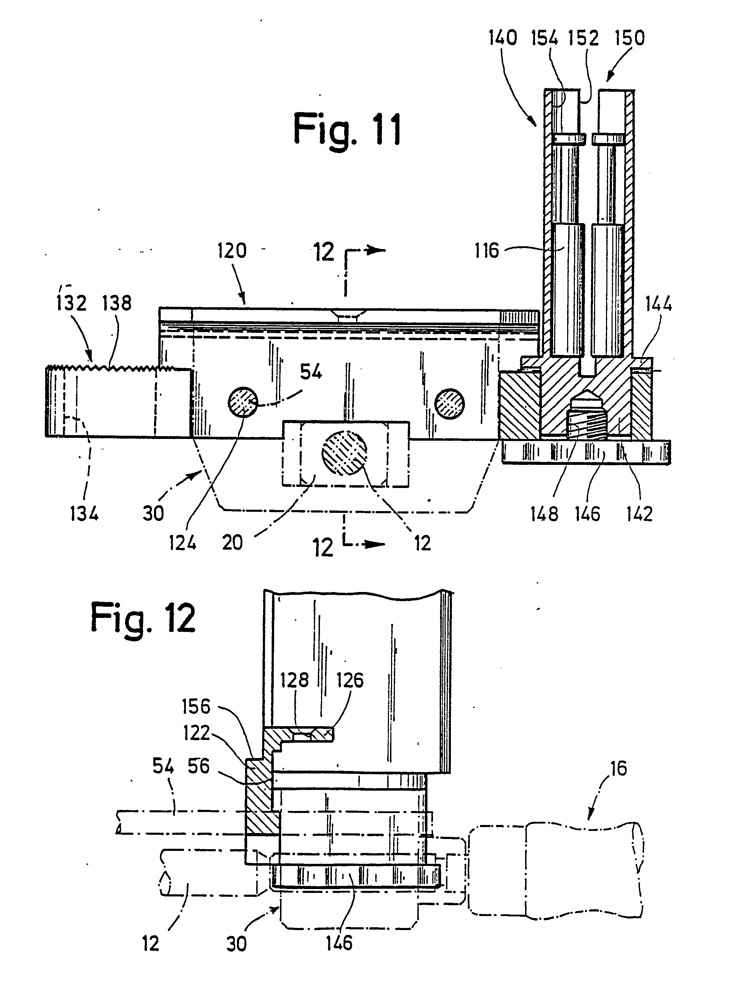

Ein weiteres Ausführungsbeispiel eines zu einer Gehrungssäge-Vorrichtung ergänzten Schraubstocks zeigen die Fig. 10 bis 12. Dabei ist die unverschiebliche Spannbacke 30 mit einem winkelförmig ausgebildeten Trägerelement 120 versehen, dessen erster Schenkel 122 die Spannfläche 56 der Spannbacke 30 übergreift und Bohrungen 124 für die Führungsstäbe 54 aufweist. Ein zweiter, senkrecht zum ersten Schenkel 122 stehender Schenkel 126 des Trägerelements 120 liegt auf einer Oberseite der Spannbacke 30 an und besitzt eine Bohrung 128, die mit dem mittleren der Einsteckkanäle 60 fluchtet. Ein Fixieren des Trägerelements 120 erfolgt mittels einer durch die Bohrung 128 hindurchsteckbaren Schraube 130, die ein selbstschneidendes Gewinde aufweist und sich somit selbst in den Wandflächen des mittleren Einsteckkanals 60 verankert.

Beiderseits der Spannbacke 30 ist jeweils ein bevorzugterweise bezüglich deren Spannfläche 56 zurückversetztes und bezüglich deren Oberkante nach unten versetztes Lagerauge 132 angeordnet, welches eine zu den Schwenkachsen der Spannbacken achsparallele Bohrung 134 besitzt. Auf der nach oben gewandten Seite 136 des Lagerauges 132 ist um die Bohrung 134 eine kreisringförmige Zahnungsfläche 138 mit radial zur Bohrung 134 verlaufenden Zahnflächen vorgesehen.

Die Lagerung der als Ganzes mit 140 bezeichneten Führung für die Rückensäge 108 erfolgt durch einen drehbar in der Bohrung 134 gelagerten zylindrischen Ansatz dieser Führung 140 mit einem die Zahnungsfläche 138 übergreifenden Ringbund 144, der seinerseits auf einer der Zahnfläche 138 zugewandten Seite ebenfalls radial verlaufende Zahnflächen besitzt, so dass die Führung 140 durch diese beiden ineinandergreifenden Verzahnungen in dem Lagerauge 132 drehfest arretierbar ist. Dazu ist eine die Unterseite des Lagerauges 132 übergreifende Feststellschraube 146 vorgesehen, die in einer Gewindebohrung 148 des zylindrischen Ansatzes 142 verankert ist.

Von dem zylindrischen Ansatz 142 erstrecken sich zwei plattenähnliche und parallel zueinander angeordnete Führungsteile 150 nach oben, die einen Spalt 152 mit einer durch die Achse der Bohrung 134 verlaufenden Mittelebene begrenzen.

Eine verschiebbare Lagerung der Rückensäge 108 in dem Spalt 152 erfolgt mittels achsparallel zur Bohrung 134 angeordneter Führungswalzen 116, die in Sägeblattverschieberichtung paarweise im Abstand zueinander in Lagerbohrungen 154 der Führungsteile 150 drehbar gehalten sind. Dabei bilden jeweils zwei auf gegenüberliegenden Seiten des Spalts 152 angeordnete Führungswalzen 116 ein Paar, wobei deren Abstand so gewählt ist, dass eine einwandfreie Führung der Rückensäge 108 zwischen diesen beiden Führungswalzen 116 erfolgt. Durch diese beiden, im Abstand voneinander angeordneten Paare von Führungswalzen 116 ist die Rückensäge 108 in ihrer Winkelstellung bezüglich der Spannflächen 56 durch die Führung 140 eindeutig fixierbar.

Durch die bereits beschriebene Verzahnung zwischen der Zahnungsfläche 138 und dem Ringbund 144, die bevorzugterweise so ausgebildet ist, dass sie eine Fixierung in Schritten von fünf Winkelgraden der Führung 140 gegenüber dem Lagerauge 132 ermöglicht, kann die Rückensäge 108, ausgehend von einer mit den Spannflächen 56 einen rechten Winkel einschliessenden Stellung ohne Schwierigkeiten bis zu einem Winkel von weit über 45° gedreht werden, jedoch nur in der Richtung, in der sich der Abstand zwischen der Rükkensäge 108 und den verschieblichen Spannbacken 32 vergrössert. Zum Sägen eines zu diesem Winkel komplementären Winkels ist entweder das Werkstück umzuspannen oder es besteht die Möglichkeit, die Führung 140 in das auf der gegenüberliegenden Seite der Spannbacke 30 angeordnete Lagerauge 132 umzusetzen und dort entsprechend zu fixieren.

Vorteilhaft ist bei dieser Ausführungsform der Gehrungssägevorrichtung vor allem die Tatsache, dass das Lagerauge 132 bezüglich der Oberkanten der Spannbacken 30 und 32 nach unten versetzt ist, so dass im Gegensatz zum ersten Ausführungsbeispiel der Gehrungssägevorrichtung keine Aufsatzspannbacken 102 erforderlich sind, da eine Schneide der Rückensäge 108 so weit abgesenkt werden kann, dass ein in einem oberen Bereich zwischen dem Trägerelement 120 und der verschieblichen Spannbacke 32 gespanntes Werkstück vollständig durchtrennt werden kann. Dazu ist im ersten Schenkel des Trägerelements 122 noch eine Stufe 156 vorgesehen, die beim Spannen des Werkstücks als Anschlag dient und verhindert, dass das Werkstück zu tief eingespannt wird, so dass dessen vollständiges Durchtrennen in vertikaler Richtung nicht mehr möglich ist.

Bei dieser Gehrungssägevorrichtung kann der Schraubstock entsprechend der Form des zu sägenden Werkstücks entweder mit oder ohne die Führungsstäbe 54 verwendet werden, so dass das Werkstück auch mit gegeneinander geneigten oder versetzten Spannbacken spannbar ist. Es ist ausschliesslich sicherzustellen, dass die Schneide der Rückensäge 108 neben dem beweglichen Spannbacken 32 verläuft, so dass beim Durchsägen des Werkstücks nicht in den Spannbacken 32 gesägt wird.

**Patentansprüche**

1. Spannwerkzeug mit einer handbetätigbaren Gewindespindel (12), einer relativ zu dieser unverschiebbaren Spannbacke (30), welche an einer auf einer gewindelosen Verlängerung der Gewindespindel drehbaren Hülse (20) um eine zur Spindelachse senkrechte Achse schwenkbar angelenkt ist, sowie mit einer verschiebbaren Spannbacke (32), welche an einer auf der Gewindespindel angeordneten Mutter (18) um eine zu der Schwenkachse der anderen Spannbacke parallele Achse schwenkbar angelenkt ist, dadurch gekennzeichnet, daß das Spannwerkzeug als Schraubstock mit einander zugewandten, im wesentlichen ebenen Spannflächen (56) an den beiden Spannbacken (30, 32) ausgebildet ist, daß Führungsmittel (54) zum Parallelführen der Spannflächen (56) der Spannbacken (30, 32) vorgesehen sind, daß die Spannbacken (30, 32) Aufnahmen (52) aufweisen, die das Anbringen der Führungsmittel (54) gestatten, und daß die Führungsmittel (54) lösbar in die Aufnahmen (52) einsetzbar sind.

2. Spannwerkzeug nach Anspruch 1, gekennzeichnet, durch mindestens einen parallel zur Gewindespindel (12) durch Führungskanäle (52) in den Spannbacken (30, 32) schiebbaren Führungsstab (54).

3. Spannwerkzeug nach Anspruch 1 oder 2, dadurch gekennzeichnet, daß die Spannbacken (30, 32) Aufnahmen (50) für ein Spannmittel zum Halten des Schraubstocks aufweisen.

4. Spannwerkzeug nach einem der voranstehenden Ansprüche, dadurch gekennzeichnet, daß die Spannbacken (30, 32) Aufnahmen (60) aufweisen, die das Anbringen von Spann- und/oder Führungsmitteln (102, 112, 140) zum Halten und/oder Führen von zusätzlichen Werkzeugen (108) gestatten.

5. Spannwerkzeug nach einem der voranstehenden Ansprüche, dadurch gekennzeichnet, daß die Spannbacken (30, 32) Aufnahmen (60) aufweisen, die das Anbringen von Spann- und/oder Führungsmitteln (54, 86, 98, 102, 120) zum Halten und/oder Führen von Werkstücken (100, 103) gestatten.

6. Spannwerkzeug nach einem der voranstehenden Ansprüche, dadurch gekennzeichnet, daß die insbesondere identisch ausgebildeten Spannbacken (30, 32) ein Ober- und ein Unterteil (34, 36) aufweisen, welche durch muldenförmige, mit jeweils einem Schwenklager (46) versehene Ausnehmungen (38, 40) zusammen einen Durchgangskanal (42) für die Gewindespindel (12) bzw. deren Verlängerung (14) bilden.

7. Spannwerkzeug nach Anspruch 6, dadurch gekennzeichnet, daß Ober- und Unterteil (34, 36) durch Schrauben (62) miteinander verbunden sind.

8. Spannwerkzeug nach einem der voranstehenden Ansprüche, dadurch gekennzeichnet, daß die Spannbacken (30, 32) an ihrer Oberseite mehrere parallel zu den Schwenkachsen verlaufende Einstecckanäle (60) aufweisen.

9. Spannwerkzeug nach einem der Ansprüche 2 bis 8, dadurch gekennzeichnet, daß die Spannbacken (30, 32) zu beiden Seiten der Gewindespindel (12) jeweils mindestens einen Führungskanal (52) aufweisen und daß auf der von der unverschiebbaren Spannbacke (30) abgewandten Seite der verschiebbaren Spannbacke (32) auf die in die Spannbacken einschiebbaren Führungsstäbe (54) eine Halterung (76) für ein Zusatzaggregat aufschiebbar ist.

10. Spannwerkzeug nach Anspruch 9, dadurch gekennzeichnet, daß die Halterung (76) eine Durchtrittsöffnung (96) für die Gewindespindel (12) aufweist und daß auf die letztere auf der von den Spannbacken (30, 32) abgewandten Seite der Halterung (76) ein mit einem Innengewinde (72) versehener Handgriff (70) aufschraubbar ist, durch welchen die Halterung (76) längs der Führungsstäbe (54) verschiebbar ist.

11. Spannwerkzeug nach Anspruch 10, dadurch gekennzeichnet, daß zwischen den verschiebbaren Spannbacken (30, 32) und der Halterung (76) durch die Führungsstäbe (54) gehaltene Schraubenfedern (78) angeordnet sind.

12. Spannwerkzeug nach den Ansprüchen 7 oder 8, gekennzeichnet durch auf die Spannbacken (30, 32) aufsetzbare Werkstück- und/oder Werkzeughalter (86).

13. Spannwerkzeug nach Anspruch 12, gekennzeichnet durch auf die Spannbacken (30, 32) aufsetzbare, jeweils um einen der Einsteckkanäle (60) schwenkbare Führungen (112) für ein Sägeblatt (108).

14. Spannwerkzeug nach Anspruch 8, gekennzeichnet durch eine an einer der Spannbacken (30, 32), insbesondere der unverschiebbaren Spannbacke (30), anbringbare Führung (140) für ein Sägeblatt (108), wobei diese Führung (140) zwei in Sägeblatt-Verschieberichtung im Abstand voneinander angeordnete Walzenpaare (116) aufweist und um eine zu den Schwenkachsen parallele Achse drehbar ist.

15. Spannwerkzeug nach Anspruch 14, dadurch gekennzeichnet, daß die die Führung (140) tragende Spannbacke (30) mit einem Trägerelement (120) ausgestattet ist, das mindestens auf einer Seite der Spannbacke ein gegenüber einer Oberkante der Spannbacke (30) nach unten versetztes Lagerauge (132) zur drehbaren Aufnahme der Führung (140) besitzt.

16. Spannwerkzeug nach einem oder mehreren der vorstehenden Ansprüche, dadurch gekennzeichnet, daß mindestens die unverschiebbare Spannbacke (30) mehrere, zu ihrer Unterseite parallele Einstecköffnungen (50) für einen Spannzwingenarm besitzt.

**Revendications**

1. Outil de serrage comportant une broche filetée (12) pouvant être actionnée manuellement, une mâchoire de serrage (30) qui est immobile par rapport à cette broche et est articulée, de manière à pouvoir pivoter autour d'un axe perpendiculaire à l'axe de la broche, sur une douille (20) pouvant tourner sur un prolongement non fileté de la broche filetée, ainsi qu'une mâchoire de serrage mobile (32), qui est articulée, de manière à pouvoir pivoter autour d'un axe parallèle à l'axe de pivotement de l'autre mâchoire, sur un écrou (18) disposé sur la broche filetée, caractérisé par le fait que l'outil de serrage est réalisé sous la forme d'un étau comportant des surfaces de serrage essentiellement planes (56), tournées l'une vers l'autre et situées sur les deux mâchoires de serrage (30, 32), qu'il est prévu des moyens de guidage (54) servant à réaliser le guidage parallèle des surfaces de serrage (56) des mâchoires de serrage (30, 32), que les mâchoires de serrage (30, 32) comportent des logements (52), qui permettent le montage des moyens de guidage (54), et que les moyens de guidage (54) peuvent être insérés de façon amovible dans les logements (52).

2. Outil de serrage selon la revendication 1, caractérisé par au moins une tige de guidage (54) pouvant être déplacée parallèlement à la broche filetée (12) dans des conduits de guidage (52) ménagés dans les mâchoires de serrage (30, 32).

3. Outil de serrage selon la revendication 1 ou 2, caractérisé en ce que les mâchoires de serrage (30, 32) comportent des logements (50) pour un moyen de serrage servant à retenir l'étau.

4. Outil de serrage selon l'une des revendications précédentes, caractérisé en ce que les mâchoires de serrage (30, 32) possèdent des logements (60), qui permettent le montage de moyens de serrage et/ou de guidage (102, 112, 140) pour retenir et/ou guider des outils supplémentaires (108).

5. Outil de serrage selon l'une des revendications précédentes, caractérisé en ce que les mâchoires de serrage (30, 32) possèdent des logements (60), qui permettent le montage de moyens de serrage et/ou de moyens de guidage (54, 86, 98, 102, 120) servant à retenir ou guider des pièces à usiner (100, 103).

6. Outil de serrage selon l'une des revendications précédentes, caractérisé en ce que les mâchoires de serrage (30, 32), possédant notamment le même agencement, possèdent une partie supérieure et une partie inférieure (34, 36), qui forment ensemble, grâce à la présence de logements en forme d'auges (38, 40), comportant chacun un palier (46), un conduit de passage (42) pour la broche filetée (12) ou son prolongement (14).

7. Outil de serrage selon la revendication 6, caractérisé en ce que la partie supérieure et la partie inférieure (34, 36) sont reliées entre elles par des vis (62).

8. Outil de serrage selon l'une des revendications précédentes, caractérisé en ce que les mâchoires de serrage (30, 32) possèdent, sur leur face supérieure, plusieurs conduits d'enfichage (60) qui s'étendent parallèlement aux axes de pivotement.

9. Outil de serrage selon l'une des revendications 2 à 8, caractérisé en ce que les mâchoires de serrage (30, 32) possèdent, des deux côtés de la broche filetée (12), respectivement au moins un conduit de guidage (52), et que sur le côté de la mâchoire mobile de serrage (32), tourné à l'opposé de la mâchoire immobile de serrage (30), un dispositif de retenue (67) prévu pour un mécanisme additionnel peut être emmanché sur les tiges de guidage (54) qui peuvent être insérées dans les mâchoires de serrage.

10. Outil de serrage selon la revendication 9, caractérisé en ce que le dispositif de retenue (76) possède une ouverture de passage (96) pour la broche filetée (12) et que sur cette dernière peut être vissée, sur le côté du dispositif de retenue tourné à l'opposé des mâchoires de serrage (30, 32), une poignée (70), qui comporte un taraudage (72) et à l'aide de laquelle le dispositif de retenue (76) peut être déplacé le long des tiges de guidage (54).

11. Outil de serrage selon la revendication 10, caractérisé en ce qu'entre les mâchoires de serrage (30, 32) et le dispositif de retenue (76) sont disposés des ressorts hélicoïdaux (78) maintenus par les tiges de guidage (54).

12. Outil de serrage selon la revendication 7 ou 8, caractérisé par un porte-pièce à usiner et/ou un porte-outil (86) pouvant être monté sur les mâchoires de serrage (30, 32).

13. Outil de serrage selon la revendication 12, caractérisé par des guides (112), qui peuvent être montés sur la mâchoire de serrage (30, 32), peuvent pivoter respectivement autour de l'un des conduits d'enfichage (60) et sont prévus pour une lame de scie (108).

14. Outil de serrage selon la revendication 8, caractérisé par un guide (140), qui peut être monté sur l'une des mâchoires de serrage (30, 32), notamment la mâchoire immobile de serrage (30, et est prévu pour une lame de scie (108), ce guide (140) comportant deux couples de cylindres (116) distants l'un de l'autre dans la direction de déplacement de la lame de scie et pouvant tourner autour d'un axe parallèle aux axes de pivotement.

15. Outil de serrage selon la revendication 14, caractérisé en ce que la mâchoire de serrage (30), qui porte le guide (140), est équipée d'un élément de support (120), qui possède, au moins sur un côté de la mâchoire de serrage, un oeillet de palier (132), qui est décalé vers le bas par rapport à un bord supérieur de la mâchoire de serrage (30) et sert à loger le guide (140) de manière qu'il puisse tourner.

16. Outil de serrage selon une ou plusieurs des revendications précédentes, caractérisé en ce qu'au moins la mâchoire immobile de serrage (30) possède plusieurs ouvertures d'enfichage (50) qui sont parallèles à sa face inférieure et sont destinées à loger un bras de serrage.

**Claims**

1. Clamping tool comprising a manually actuatable threaded spindle (12), a clamping jaw (30) immovable relative thereto, said jaw being articulatedly attached, for swivelling movement about an axis perpendicular to the spindle axis, to a sleeve (20) rotatable on a threadless extension of said threaded spindle, as well as a movable clamping jaw (32) articulatedly attached, for swivelling movement about an axis parallel to the swivel axis of said other clamping jaw, to a nut (18) arranged on said threaded spindle, characterized in that said clamping tool is designed as a vice having on said two clamping jaws (30, 32) essentially planar clamping faces (56) facing one another, that guide means (54) for parallel guidance of said clamping faces (56) of said clamping jaws (30, 32) are provided, that said clamping jaws (30, 32) include receiving means (52) allowing the attachment of said guide means (54), and that said guide means (54) are releasably insertable into said receiving means (52).

2. Clamping tool as defined in claim 1, characterized by at least one guide rod (54) movable parallel to the threaded spindle (12) through guide channels (52) in said clamping jaws (30, 32).

3. Clamping tool as defined in claims 1 or 2, characterized in that said clamping jaws (30, 32) include receiving means (50) for a clamping means for holding said vice.

4. Clamping tool as defined in any of the preceding claims, characterized in that said clamping jaws (30, 32) include receiving means (60) allowing attachment of clamping and/or guide means (102, 112, 140) for holding and/or guiding additional tools (108).

5. Clamping tool as defined in any of the preceding claims, characterized in that said clamping jaws (30, 32) include receiving means (60) allowing attachment of clamping and/or guide means (54, 86, 98, 102, 120) for holding and/or guiding workpieces (100, 103).

6. Clamping tool as defined in any of the preceding claims, characterized in that said clamping jaws (30, 32) are, in particular, of identical design and have an upper and a lower part (34, 36) together forming a through passage (42) for said threaded spindle (12) or its extension (14), respectively, by way of trough-like recesses (38, 40) each provided with a swivel bearing (46).

7. Clamping tool as defined in claim 6, characterized in that upper part and lower part (34, 36) are connected with one another by screws (62).

8. Clamping tool as defined in any of the preceding claims, characterized in that said clamping jaws (30, 32) have on their upper side a plurality of insert channels (60) extending parallel to the swivel axes.

9. Clamping tool as defined in any of claims 2 to 8, characterized in that said clamping jaws (30, 32) each have at least one guide channel (52) on both sides of said threaded spindle (12) and that a mounting (76) for an additional unit is adapted to be slipped onto said guide rods (54) insertable into said clamping jaws on the side of said movable clamping jaw (32) remote from said immovable clamping jaw (30).

10. Clamping tool as defined in claim 9, characterized in that said mounting (76) has a through opening (96) for said threaded spindle (12) and that a handle (70) provided with an internal thread (72) is adapted to be threaded onto said spindle on the side of said mounting (76) remote from said clamping jaws (30, 32), said mounting (76) being displaceable by said handle along said guide rods (54).

11. Clamping tool as defined in claim 10, characterized in that helical springs (78) held by said guide rods (54) are arranged between said movable clamping jaws (30, 32) and said mounting (76).

12. Clamping tool as defined in claims 7 or 8,

characterized by workpiece and/or tool, holders (86) adapted to be placed on said clamping jaws (30, 32).

13. Clamping tool as defined in claim 12, characterized by guide means (112) for a saw blade (108) adapted to be placed on said clamping jaws (30, 32) and each adapted to swivel about one of said insert channels (60).

14. Clamping tool as defined in claim 8, characterized by a guide means (140) for a saw blade (108) adapted to be attached to one of said clamping jaws (30, 32), in particular said immovable clamping jaw (30), said guide means (140) having two pairs of rollers (116) spaced from one another in the direction of displacement of said saw blade and being rotatable about an axis parallel to said swivel axes.

15. Clamping tool as defined in claim 14, characterized in that said clamping jaw (30) mounting said guide means (140) is equipped with a carrier element (120) having at least on one side of said clamping jaw a bearing lug (132) offset downwardly relative to an upper edge of said clamping jaw (30) for rotatably receiving said guide means (140).

16. Clamping tool as defined in any or several of the preceding claims, characterized in that at least said immovable clamping jaw (30) has a plurality of insert openings (50) parallel to its underside for a clamp arm.

# Fig.1

Fig. 2

Fig. 3

2

Fig.4

EP 0 172 555 B1

Fig.5

EP 0 172 555 B1

Fig.6

# Fig.7

EP 0 172 555 B1

Fig. 8

Fig.9

EP 0 172 555 B1

Fig. 10

EP 0 172 555 B1

Fig. 11

Fig. 12